# EUROPÄISCHE PATENTSCHRIFT

(11) **EP 3 934 785 B1**
(45) Veröffentlichungstag und Bekanntmachung des Hinweises auf die Patenterteilung: **25.06.2025**
(21) Anmeldenummer: 20710822.6
(22) Anmeldetag: 28.02.2020
(51) Int. Cl.: B01D 29/33, G05D 23/00

(54) **SIEB MIT VERÄNDERLICHEM UMFANG FÜR EIN THERMOSTATVENTIL**
SCREEN HAVING VARIABLE CIRCUMFERENCE FOR A THERMOSTATIC VALVE
FILTRE COMPORTANT UNE PÉRIPHÉRIE VARIABLE DESTINÉ À UNE VANNE THERMOSTATIQUE

(30) Priorität: 05.03.2019 DE 102019105518
(43) Veröffentlichungstag der Anmeldung: 12.01.2022
(73) Patentinhaber: Grohe AG, 58675 Hemer (DE)
(72) Erfinder: KOSTORZ, Ole, Benedikt, 58706 Menden (DE); SCHWARTPAUL, Tanja, 58809 Neuenrade (DE)
(86) Internationale Anmeldenummer: PCT/EP2020/055289
(87) Internationale Veröffentlichungsnummer: WO 2020/178174

(56) Entgegenhaltungen:
- EP-A1- 0 808 647
- WO-A1-2008/025808
- CN-A- 109 173 387
- FR-A1- 2 857 720
- US-A1- 2004 031 736

## Beschreibung

Die vorliegende Erfindung betrifft EIN Sieb, wobei das Sieb
a) ringförmig ausgebildet ist,
b) ausgebildet zu einem Filtern von Wasser in einem Thermostatventil,
c) von einem ersten Zustand in einen weiteren Zustand überführbar ist,
d) in dem ersten Zustand einen ersten Umfang hat, und
e) in dem weiteren Zustand einen weiteren Umfang hat,
dadurch gekennzeichnet, dass der weitere Umfang mehr ist als der erste Umfang. Ferner betrifft die Erfindung ein Thermostatventil, beinhaltend das Sieb; eine Thermostatarmatur, beinhaltend das Thermostatventil; ein Verfahren, beinhaltend ein Verbinden des Siebs mit einem Thermostatventilkörper; und eine Verwendung des Siebs in einem Thermostatventil oder in einer Thermostatarmatur oder in beiden.

Ringförmige Siebe, die zu einem Filtern von Flüssigkeiten ausgebildet sind, sind aus dem Stand der Technik bekannt, beispielsweise aus FR 2 857 720 A1, EP 0 808 647 A1 und WO 2008/025808 A1. Darüber hinaus ist aus US 2004/0031736 A1 ein ringförmiges Sieb zum Filtern von Wasser bekannt.

Thermostatarmaturen, auch Thermostatmischarmaturen, des Stands der Technik erlauben eine konstante Auslauftemperatur des von ihnen bereitgestellten Mischwassers und zwar weitestgehend unabhängig von Temperatur- und Wasserdruckschwankungen der Wasserzuleitungen. Solche Thermostatarmaturen können beispielsweise als Dusch-, Badewannen- oder Waschtischarmaturen ausgebildet sein. In derartigen sanitären Thermostatarmaturen des Stands der Technik werden Thermostatventile verwendet, um die Auslauftemperatur des von der Armatur bereitgestellten Mischwassers möglichst bei einem voreingestellten Wert konstant zu halten. Hierfür regelt das Thermostatventil in Abhängigkeit der Wassertemperatur in der Armatur typischerweise den Wasserdurchfluss des Kaltwassers und somit das Kalt- zu Warmwasserverhältnis im Mischwasser. Für eine möglichst lange Lebensdauer des Thermostatventils und somit der Armatur ist es notwendig, dass ein Eindringen von Schwebstoffen wie beispielsweise Kalkteilchen in das Thermostatventil vermieden wird. Hierfür ist das Thermostatventil üblicherweise mit einem Sieb ausgestattet. Im Stand der Technik wird hierfür ein Metallsieb verwendet, welches auf einen Thermostatventilkörper geschweißt oder aufgesteckt wird. Wird das Sieb aufgeschweißt, ist es stoffschlüssig mit dem Ventilkörper verbunden und nicht mehr zerstörungsfrei zu demontieren. Somit kann das Sieb zu Wartungszwecken nicht entfernt werden. Für eine lange Lebensdauer des Ventils und somit der Armatur ist eine regelmäßige Reinigung des Siebs jedoch geboten. Ein aufgeschweißtes Sieb kann jedoch nicht demontiert und beispielsweise in einer Entkalkerlösung behandelt werden. Wird das Sieb lediglich aufgesteckt, wird mindestens ein zusätzlicher O-Ting im Thermostatventilaufbau benötigt, um das Sieb zu fixieren. Dies verteuert die Herstellung. Ferner kann es bei nicht idealer Passform des Siebs auf dem Ventilkörper zu einem Toleranzspalt kommen. Wird das Sieb nun in die Armatur eingebaut, beispielsweise gesteckt, kann es durch das durch den Spalt bedingte Abstehen des Siebs leicht zu einer Beschädigung des Siebs kommen. In diesem Fall wurde Ausschuss produziert, da das Sieb ausgetauscht und ein neues Sieb montiert werden muss. Zudem kann es an dem teilweise abstehenden scharfkantigen Metallsieb leicht zu Verletzungen bei dem montierenden Personal kommen. Dies ist insbesondere relevant, da die Fertigung hier aufgrund der sensiblen Bauteile üblicherweise Handarbeit erfordert. Kommt es weder zu Verletzungen noch zu einer Beschädigung des Siebs, wird dieses mit dem Spalt in die Armatur eingebaut. Infolge des Toleranzspalts sitzt das Sieb jedoch nicht dicht und es können Schwebekörper in das Ventil eindringen. Somit erfüllt das Sieb seinen Zweck nicht ideal und die Nutzdauer des Ventils und damit der Armatur werden begrenzt.

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, eine Thermostatarmatur mit einer erhöhten Nutzdauer bereitzustellen. Dies gilt insbesondere bei einer Nutzung der Thermostatarmatur mit kalkhaltigem Wasser. Ferner ist es eine Aufgabe der Erfindung, eine möglichst einfach und zerstörungsfrei wartbare Thermostatarmatur bereitzustellen. Das vorgenannte Warten ist insbesondere ein Demontieren und Reinigen eines Siebs eines Thermostatventils der Thermostatarmatur. Eine weitere Aufgabe der Erfindung ist es, ein Thermostatventil bereitzustellen, welches mit weniger Ausschuss produziert werden kann. Eine weitere Aufgabe der Erfindung ist es, ein Thermostatventil bereitzustellen, welches mit einer geringeren Verletzungsgefahr hergestellt werden kann. Eine weitere Aufgabe der Erfindung ist es, ein Thermostatventil bereitzustellen, welches einen einfacheren Aufbau aufweist, bereitzustellen. Ferner ist es eine Aufgabe der Erfindung, ein Thermostatventil, welches einfacher und/oder kostengünstiger herstellbar ist, bereitzustellen. Eine weitere Aufgabe der Erfindung ist es, ein Sieb Thermostatventile bereitzustellen, wobei sich das Sieb für Thermostatventile unterschiedlichen Durchmessers gleichermaßen eignet. Eine weitere Aufgabe der Erfindung ist es, einen der vorgenannten Vorteile zu erzielen, wobei ein Sieb des Thermostatventils einen gleichbleibend guten oder sogar verbesserten Dichtsitz, insbesondere bei großen Wassertemperaturunterschieden, aufweist.

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet eine Ausführungsform 1 eines Sieb, wobei das Sieb
a) ringförmig ausgebildet ist,
b) ausgebildet zu einem Filtern von Wasser in einem Thermostatventil,
c) von einem ersten Zustand in einen weiteren Zustand überführbar ist,
d) in dem ersten Zustand einen ersten Umfang hat, und
e) in dem weiteren Zustand einen weiteren Umfang hat,
dadurch gekennzeichnet, dass der weitere Umfang mehr ist als der erste Umfang. Zum Filtern von Wasser in dem Thermostatventil weist das Sieb bevorzugt eine Vielzahl von Sieböffnungen auf, die so ausgebildet sind, dass sie Wasser hindurchlassen, jedoch Schwebstoffe im Wasser, wie beispielsweise Rost- oder Kalkteilchen, nicht passieren lassen. Das Überführen ist bevorzugt werkzeuglos realisierbar. Hierzu kann das Sieb vorzugsweise per Hand aufgeweitet werden. Das ringförmige Sieb weist bevorzugt eine Form eines dünnwandigen Hohlzylinders auf. Dünnwandig heißt hier bevorzugt, dass ein Verhältnis von Innendurchmesser zu Außendurchmesser des Hohlzylinders mindestens 0,9 beträgt.

In einer erfindungsgemäßen Ausführungsform 2 ist das Sieb nach der Ausführungsform 1 ausgestaltet, wobei das Sieb in einer achsialen Richtung
a) in dem ersten Zustand eine erste Länge hat, und
b) in dem weiteren Zustand eine weitere Länge hat,
wobei die erste Länge und die weitere Länge sich um weniger als 5 %, bevorzugt um weniger als 4 %, bevorzugter um weniger als 3 %, bevorzugter um weniger als 2 %, am bevorzugtesten um weniger als 1 %, der ersten Länge unterscheiden.

In einer erfindungsgemäßen Ausführungsform 3 ist das Sieb nach der Ausführungsform 1 oder 2 ausgestaltet, wobei das Sieb einstückig ausgebildet ist. Bevorzugt beinhaltet das Sieb keine Fäden oder Drähte oder beides. Ferner bevorzugt beinhaltet das Sieb keine miteinander gewobenen oder geflochtenen oder beides Bestandteile. Das Sieb ist bevorzugt durch ein Gießverfahren erhältlich. Ein bevorzugtes Gießverfahren ist ein Spritzgießverfahren.

In einer erfindungsgemäßen Ausführungsform 4 ist das Sieb nach einer der vorhergehenden Ausführungsformen ausgestaltet, wobei das Überführen des Siebs von dem ersten Zustand in den weiteren Zustand reversibel ist.

In einer erfindungsgemäßen Ausführungsform 5 ist das Sieb nach einer der vorhergehenden Ausführungsformen ausgestaltet, wobei das Sieb sich ohne äußere Krafteinwirkung von dem weiteren Zustand in den ersten Zustand begibt.

In einer erfindungsgemäßen Ausführungsform 6 ist das Sieb nach einer der vorhergehenden Ausführungsformen ausgestaltet, wobei der weitere Umfang mindestens 1 %, bevorzugt mindestens 2 %, bevorzugter mindestens 3 %, bevorzugter mindestens 4 %, am bevorzugtesten mindestens 5 %, mehr ist als der erste Umfang, bezogen auf den ersten Umfang.

In einer erfindungsgemäßen Ausführungsform 7 ist das Sieb nach einer der vorhergehenden Ausführungsformen ausgestaltet, wobei das Sieb eine Siebmantelfläche beinhaltet, wobei ein Federbereich der Siebmantelfläche als ein Federelement ausgebildet ist. Das Federelement federt bevorzugt in einer Umfangsrichtung des Siebs. Bevorzugt ist das Federelement ausgebildet als eine radiale Auswölbung oder Auslenkung oder beides der Siebmantelfläche. Hierbei erstreckt sich die Auswölbung der Auslenkung oder beides bevorzugt jeweils in achsialer Richtung von einer Stirnseite zu einer gegenüberliegenden Stirnseite des ringförmigen Siebs. Ferner kann die Auswölbung oder Auslenkung oder beides jeweils nach innen oder außen gerichtet sein. Eine bevorzugte Siebmantelfläche ist eine Zylindermantelfläche. Die Siebmantelfläche beinhaltet bevorzugt eine Vielzahl von Sieböffnungen.

In einer erfindungsgemäßen Ausführungsform 8 ist das Sieb nach einer der vorhergehenden Ausführungsformen ausgestaltet, wobei das Sieb eine Siebmantelfläche beinhaltet, wobei die Siebmantelfläche eine Vielzahl von Federelementen beinhaltend ausgebildet ist. Bevorzugt sind die Federelemente entlang eines Umfangs des Siebs verteilt, bevorzugt äquidistant verteil, angeordnet. Ferner bevorzugt federn die Federelemente jeweils in der Umfangsrichtung des Siebs. Bevorzugt sind die Federelemente jeweils ausgebildet als eine radiale Auswölbung oder Auslenkung oder beides der Siebmantelfläche. Hierbei erstreckt sich die Auswölbung der Auslenkung oder beides bevorzugt jeweils in achsialer Richtung von einer Stirnseite zu einer gegenüberliegenden Stirnseite des ringförmigen Siebs. Ferner kann die Auswölbung oder Auslenkung oder beides jeweils nach innen oder außen gerichtet sein. Die Vielzahl von Federelementen verleiht der Siebmantelfläche bevorzugt eine wellenartige Form, wobei die Wellen in der Umfangsrichtung verlaufen und Wellenberge sich in der radialen Richtung erheben.

In einer erfindungsgemäßen Ausführungsform 9 ist das Sieb nach einer der vorhergehenden Ausführungsformen ausgestaltet, wobei das Sieb eine Siebmantelfläche beinhaltet, wobei die Siebmantelfläche
a) eine Vielzahl von Sieböffnungen beinhaltet, und
b) einen Bereich beinhaltet, der keine Sieböffnungen beinhaltet,
wobei sich der Bereich in achsialer Richtung des Siebs von einer Stirnseite zu einer gegenüberliegenden Stirnseite des Siebs erstreckt. In einer bevorzugten Ausführungsform beinhaltet das Sieb mindestens eine, bevorzugt mindestens 2, bevorzugter mindestens 3, weitere Bereiche, die jeweils keine Sieböffnungen beinhalten und sich in achsialer Richtung des Siebs von der Stirnseite zu der gegenüberliegenden Stirnseite des Siebs erstrecken. In einer weiteren bevorzugten Ausführungsform erstreckt sich der Bereich in der achsialen Richtung des Siebs von der Stirnseite zu der gegenüberliegenden Stirnseite des Siebs und zudem erstreckt sich der Bereich entlang des gesamten Umfangs des Siebs. Der Bereich hat bevorzugt einen Flächeninhalt, welcher größer als mindestens ein Dreifaches, bevorzugt mindestens ein Fünffaches, bevorzugter mindestens ein Zehnfaches, eines Flächeninhalts einer der Sieböffnungen ist. Jeder weitere Bereich hat bevorzugt einen Flächeninhalt, welcher größer als mindestens ein Dreifaches, bevorzugt mindestens ein Fünffaches, bevorzugter mindestens ein Zehnfaches, eines Flächeninhalts einer der Sieböffnungen ist.

In einer erfindungsgemäßen Ausführungsform 10 ist das Sieb nach einer der vorhergehenden Ausführungsformen ausgestaltet, wobei das Sieb aus einem Kunststoff oder aus einem Metall oder beides besteht. Bevorzugt besteht das Sieb aus Kunststoff.

Einen Beitrag zur Erfüllung mindestens einer der erfindungsgemäßen Aufgaben leistet eine Ausführungsform 1 eines Thermostatventils, beinhaltend das Sieb nach einer seiner Ausführungsformen 1 bis 10.

In einer erfindungsgemäßen Ausführungsform 2 ist das Thermostatventil nach seiner Ausführungsform 1 ausgestaltet, wobei das Thermostatventil einen Thermostatventilkörper beinhaltet,
wobei das Sieb kraftschlüssig mit dem Thermostatventilkörper verbunden ist. Bevorzugt ist das Sieb nicht stoffschlüssig mit dem Thermostatventilkörper verbunden. Der Thermostatventilkörper beinhaltet bevorzugt einen Regler. Ein bevorzugter Regler beinhaltet ein Bimetall oder eine mit einem Dehnstoff gefüllte Kapsel. Ein bevorzugtes Bimetall ist als Feder ausgebildet. Ein bevorzugter Dehnstoff ist ein Paraffin.

Einen Beitrag zur Erfüllung mindestens einer der erfindungsgemäßen Aufgaben leistet eine Ausführungsform 1 einer Thermostatarmatur, beinhaltend das Thermostatventil nach seiner Ausführungsform 1 oder 2. Die Thermostatarmatur ist eine sanitäre Thermostatarmatur. Eine sanitäre Thermostatarmatur ist eines ausgewählt aus einer Duscharmatur, einer Badewannenarmatur und einer Waschtischarmatur oder eine Kombination aus mindestens zwei der Vorgenannten.

Einen Beitrag zur Erfüllung mindestens einer der erfindungsgemäßen Aufgaben leistet eine Ausführungsform 1 eines Verfahrens, beinhaltend als Verfahrensschritte
a) Bereitstellen des Siebs nach einer seiner Ausführungsformen 1 bis 10, wobei das Sieb sich in dem ersten Zustand befindet;
b) Überführen des Siebs von dem ersten Zustand in den weiteren Zustand; und
c) Verbinden des Siebs mit einem Thermostatventilkörper.

Das Verbinden ist bevorzugt ein kraftschlüssiges Verbinden. Bevorzugt beinhaltet das Verbinden kein stoffschlüssiges Verbinden.

Einen Beitrag zur Erfüllung mindestens einer der erfindungsgemäßen Aufgaben leistet eine Ausführungsform 1 einer Verwendung nach einer seiner Ausführungsformen 1 bis 10 in einem Thermostatventil oder in einer Thermostatarmatur oder in beiden.

Bevorzugte Komponenten und Bestandteile einer erfindungsgemäßen Ausführungsform einer Kategorie der Erfindung sind auch in weiteren Ausführungsformen der anderen Kategorien der Erfindung für gleichnamige oder äquivalente Komponenten und Bestandteile bevorzugt. Ebenso sind bevorzugte Merkmale einer erfindungsgemäßen Ausführungsform einer Kategorie der Erfindung auch in weiteren Ausführungsformen der anderen Kategorien der Erfindung entsprechend bevorzugt.

Die Erfindung wird im Folgenden durch Beispiele und Zeichnungen genauer dargestellt, wobei die Beispiele und Zeichnungen keine Einschränkung der Erfindung bedeuten. Die Zeichnungen sind, sofern nicht anders angegeben, nicht maßstabsgetreu.

Es zeigen:
- Figur 1: eine schematische Darstellung eines erfindungsgemäßen Siebs;
- Figur 2: eine schematische Darstellung eines weiteren erfindungsgemäßen Siebs;
- Figur 3a): eine schematische Darstellung eines Ausschnitts einer Siebmantelfläche eines erfindungsgemäßen Siebs in einem ersten Zustand;
- Figur 3b): eine schematische Darstellung des Ausschnitts der Siebmantelfläche des erfindungsgemäßen Siebs der Figur 3a) in einem weiteren Zustand;
- Figur 4a): eine schematische Darstellung eines Ausschnitts einer Siebmantelfläche eines weiteren erfindungsgemäßen Siebs in einem ersten Zustand;
- Figur 4b): eine schematische Darstellung des Ausschnitts der Siebmantelfläche des erfindungsgemäßen Siebs der Figur 4a) in einem weiteren Zustand;
- Figur 5: eine schematische Darstellung eines erfindungsgemäßen Thermostatventils im Querschnitt;
- Figur 6: eine schematische Darstellung einer erfindungsgemäßen Thermostatarmatur; und
- Figur 7: ein Ablaufdiagramm eines erfindungsgemäßen Verfahrens.

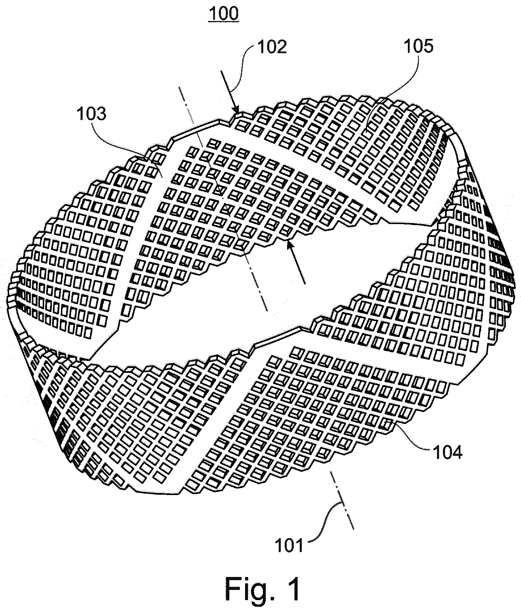

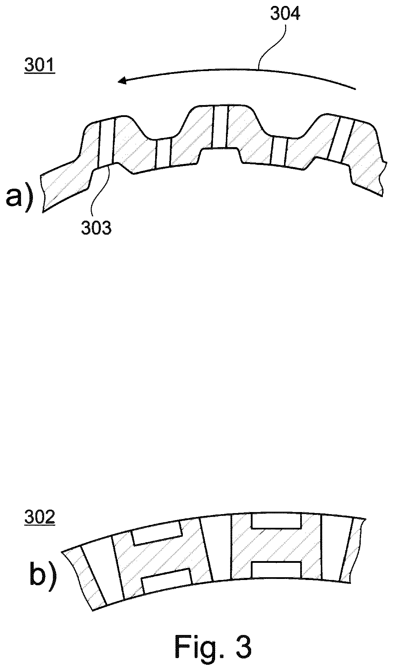

Figur 1 zeigt eine schematische Darstellung eines erfindungsgemäßen Siebs 100. Das Sieb 100 ist ringförmig ausgebildet. Hier hat das Sieb 100 zudem die Form eines dünnwandigen Hohlzylinders. Ferner ist das Sieb 100 ausgebildet zu einem Filtern von Wasser in einem Thermostatventil 500. Hierzu verfügt das Sieb 100 in seiner Siebmantelfläche 105 über eine Vielzahl von Sieböffnungen 104. Zu einem Montieren und einem Demontieren des Siebs 100 mit dem Thermostatventil 500 ist das Sieb 100 von einem ersten Zustand 301 in einen weiteren Zustand 302 und umgekehrt überführbar. Das Überführen ist somit reversibel. Zudem ist das Überführen als werkzeugloses Aufweiten des Siebs 100 per Hand möglich. In dem ersten Zustand 301 hat das Sieb 100 einen ersten Umfang und in dem weiteren Zustand 302 einen weiteren Umfang. Hierbei ist der weitere Umfang 6 % mehr als der erste Umfang, bezogen auf den ersten Umfang. Bei dem Aufweiten ändert sich eine Länge 102 des Siebs 100 in einer achsialen Richtung 101 nicht. Das Sieb 100 besteht aus Kunststoff und ist einstückig durch ein Spritzgießverfahren erhältlich. Hierfür beinhaltet das Sieb einen Bereich 103, der keine Sieböffnungen 104 beinhaltet. Dieser Bereich 103 erstreckt sich in der achsialen Richtung 101 des Siebs 100 von einer Stirnseite zu einer gegenüberliegenden Stirnseite des Siebs 100 und zudem erstreckt sich der Bereich 103 entlang des gesamten Umfangs des Siebs 100. Detaildarstellungen der Siebmantelfläche 105 des Siebs 100 sind in den Figuren 3a) und 3b) gezeigt.

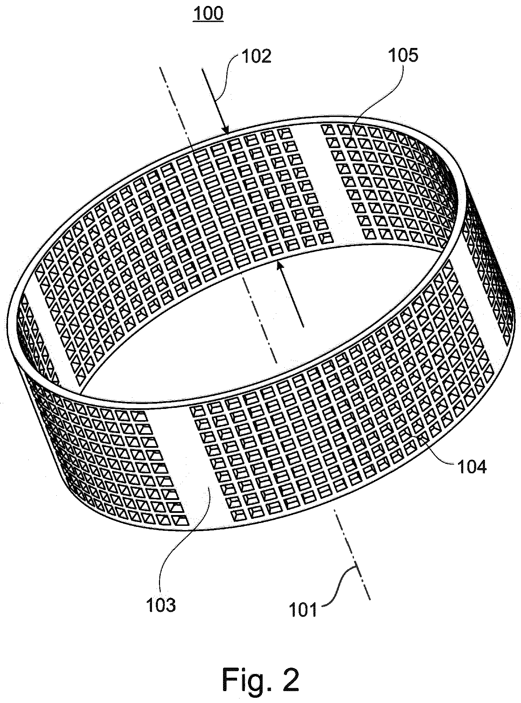

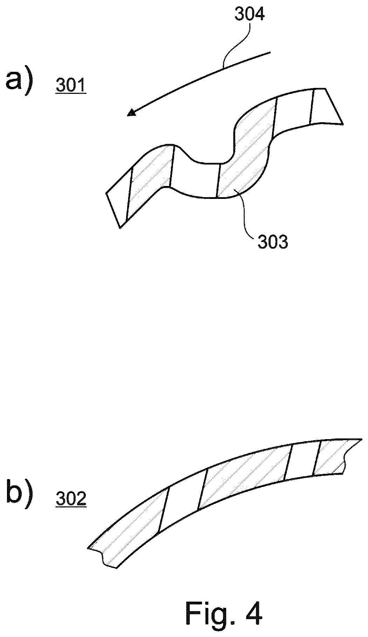

Figur 2 zeigt eine schematische Darstellung eines weiteren erfindungsgemäßen Siebs 100. Für das Sieb 100 der Figur 2 gilt ebenso die obige Beschreibung dies Siebs 100 der Figur 1. Davon abweichend ist hier der weitere Umfang 3 % mehr als der erste Umfang, bezogen auf den ersten Umfang. Ferner beinhaltet das Sieb 100 der Figur 2 4 Bereiche 103, die jeweils keine Sieböffnung 104 beinhalten. Diese Bereiche 103 erstrecken sich jeweils in der achsialen Richtung 101 des Siebs 100 von einer Stirnseite zu einer gegenüberliegenden Stirnseite des Siebs 100. Zudem sind die Bereiche 103 äquidistant entlang des Umfangs des Siebs 100 verteilt. Detaildarstellungen der Siebmantelfläche 105 des Siebs 100 der Figur 2 sind in den Figuren 4a) und 4b) gezeigt.

Figur 3a) zeigt eine schematische Darstellung eines Ausschnitts der Siebmantelfläche 105 des erfindungsgemäßen Siebs 100 der Figur 1 in dem ersten Zustand 301. Es ist zu sehen, dass die Siebmantelfläche 105 eine Vielzahl von Federelementen 303 beinhaltend ausgebildet ist. Die Federelemente 303 sind entlang des Umfangs des Siebs 100 äquidistant verteil angeordnet. Ferner federn die Federelemente 303 jeweils in einer Umfangsrichtung 304 des Siebs 100. Hier sind die Federelemente 303 jeweils ausgebildet als eine radiale Auswölbung 303 der Siebmantelfläche 105 nach außen. Hierbei erstrecken sich die Auswölbungen 303 jeweils in der achsialen Richtung 103 von einer Stirnseite zu einer gegenüberliegenden Stirnseite des ringförmigen Siebs 100.

Figur 3b) zeigt eine schematische Darstellung des Ausschnitts der Siebmantelfläche 105 des erfindungsgemäßen Siebs 100 der Figur 3a) in dem weiteren Zustand 302. Hier ist zu sehen, dass die Auswölbungen 303 durch das Aufweiten des Siebs 100 in der Umfangsrichtung 304 geglättet sind.

Figur 4a) zeigt eine schematische Darstellung eines Ausschnitts einer Siebmantelfläche 105 eines weiteren erfindungsgemäßen Siebs 100 in einem ersten Zustand 301.

Es ist zu sehen, dass die Siebmantelfläche 105 einen Federbereich mit einem Federelement 303 beinhaltet. Das Federelement 303 federt in einer Umfangsrichtung 304 des Siebs 100. Hier ist das Federelement 303 ausgebildet als eine radiale Auslenkung 303 der Siebmantelfläche 105 nach außen. Hierbei erstreckt sich die Auswölbung 303 in der achsialen Richtung 103 von einer Stirnseite zu einer gegenüberliegenden Stirnseite des ringförmigen Siebs 100.

Figur 4b) zeigt eine schematische Darstellung des Ausschnitts der Siebmantelfläche 105 des erfindungsgemäßen Siebs 100 der Figur 4a) in dem weiteren Zustand 302. Hier ist zu sehen, dass die Auslenkung 303 durch das Aufweiten des Siebs 100 in der Umfangsrichtung 304 geglättet ist.

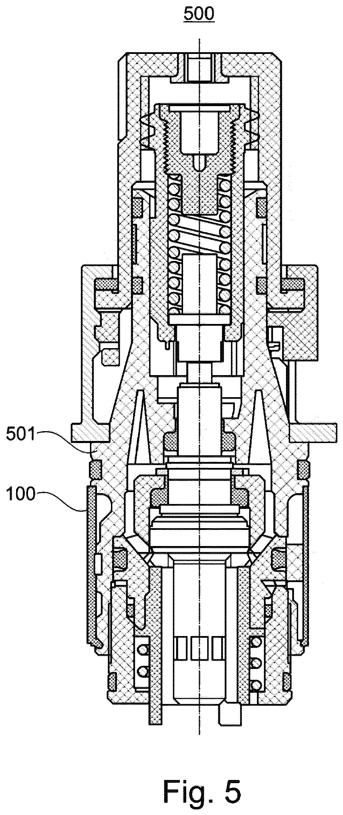

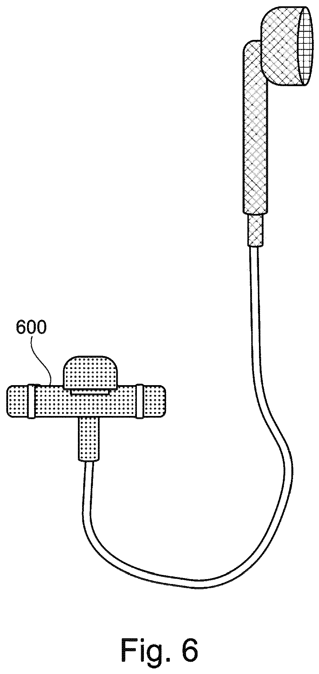

Figur 5 zeigt eine schematische Darstellung eines erfindungsgemäßen Thermostatventils 500 im Querschnitt. Das Thermostatventil 500 ist ausgebildet zu einem Einbau die Thermostatarmatur 600 der Figur 6. Ferner beinhaltet das Thermostatventil 500 das Sieb der Figur 1. Hier ist das Sieb 100 kraftschlüssig mit einem Thermostatventilkörper 501 verbunden. Hierzu hat das Sieb 100 einen Umfang, der zwischen dem ersten Umfang und dem weiteren Umfang liegt.

Figur 6 zeigt eine schematische Darstellung einer erfindungsgemäßen Thermostatarmatur 600.

Die Thermostatarmatur 600 ist eine Duscharmatur, beinhaltend das Thermostatventil 500 der Figur 5.

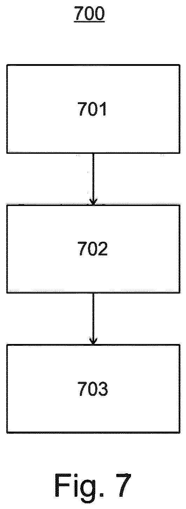

Figur 7 zeigt ein Ablaufdiagramm eines erfindungsgemäßen Verfahrens 700. In einem Verfahrensschritt a) 701 des Verfahrens 700 wird das Sieb 100 der Figur 2 bereitgestellt, wobei das Sieb 100 sich in dem in der Figur 4a) gezeigten ersten Zustand 301 befindet. In einem Verfahrensschritt b) 702 wird das Sieb 100 per Hand aufgeweitet und so von dem ersten Zustand 301 in den weiteren Zustand 302 überführt (siehe Figur 4b)). In einem folgenden Verfahrensschritt c) 703 wird das Sieb 100 kraftschlüssig mit einem Thermostatventilkörper 501 verbunden, wobei das Sieb 100 einen Zustand einnimmt, in dem das Sieb 100 einen Umfang zwischen dem ersten Umfang und dem weiteren Umfang hat. Somit wird ein Thermostatventil 500 mit dem Sieb 100 erhalten.

### LISTE DER BEZUGSZEICHEN

- **100**: erfindungsgemäßes Sieb
- **101**: achsiale Richtung
- **102**: Länge
- **103**: Bereich
- **104**: Sieböffnung
- **105**: Siebmantelfläche
- **301**: erster Zustand
- **302**: weiterer Zustand
- **303**: Federelement / Auswölbung / Auslenkung
- **304**: Umfangsrichtung
- **500**: erfindungsgemäßes Thermostatventil
- **501**: Thermostatventilkörper
- **600**: erfindungsgemäße Thermostatarmatur
- **700**: erfindungsgemäßes Verfahren
- **701**: Verfahrensschritt a)
- **702**: Verfahrensschritt b)
- **703**: Verfahrensschritt c)

## Patentansprüche

1. Ein Sieb (100), wobei das Sieb (100)
a) ringförmig ausgebildet ist,
b) ausgebildet zu einem Filtern von Wasser in einem sanitären Thermostatventil (500),
c) von einem ersten Zustand (301) in einen weiteren Zustand (302) überführbar ist,
d) in dem ersten Zustand (301) einen ersten Umfang hat, und
e) in dem weiteren Zustand (302) einen weiteren Umfang hat,
wobei der weitere Umfang mehr ist als der erste Umfang, wobei das Sieb (100) eine Siebmantelfläche (105) über eine Vielzahl von Sieböffnungen (104) beinhaltet, **dadurch gekennzeichnet, dass** ein Federbereich der Siebmantelfläche (105) als ein Federelement (303) ausgebildet ist, wobei das Federelement (303) als eine radiale Auswölbung der Siebmantelfläche (105) nach aussen ausgebildet ist.

2. Das Sieb (100) nach Anspruch 1, wobei das Sieb (100) in einer achsialen Richtung (101)
a) in dem ersten Zustand (301) eine erste Länge hat, und
b) in dem weiteren Zustand (302) eine weitere Länge hat,
wobei die erste Länge und die weitere Länge sich um weniger als 5 % der ersten Länge unterscheiden.

3. Das Sieb (100) nach Anspruch 1 oder 2, wobei das Sieb (100) einstückig ausgebildet ist.

4. Das Sieb (100) nach einem der vorhergehenden Ansprüche, wobei der weitere Umfang mindestens 1 % mehr ist als der erste Umfang, bezogen auf den ersten Umfang.

5. Das Sieb (100) nach einem der vorhergehenden Ansprüche, wobei das Sieb (100) eine Siebmantelfläche (105) beinhaltet,
wobei die Siebmantelfläche (105) eine Vielzahl von Federelementen (303) beinhaltend ausgebildet ist.

6. Ein Thermostatventil (500), beinhaltend das Sieb (100) nach einem der Ansprüche 1 bis 5.

7. Das Thermostatventil (500) nach Anspruch 6, wobei das Thermostatventil (500) einen Thermostatventilkörper (501) beinhaltet,
wobei das Sieb (100) kraftschlüssig mit dem Thermostatventilkörper (501) verbunden ist.

8. Eine Thermostatarmatur (600), beinhaltend das Thermostatventil (500) nach Anspruch 6 oder 7.

9. Ein Verfahren (700), beinhaltend als Verfahrensschritte
a) Bereitstellen des Siebs (100) nach einem der Ansprüche 1 bis 5,
wobei das Sieb (100) sich in dem ersten Zustand (301) befindet;
b) Überführen des Siebs (100) von dem ersten Zustand (301) in den weiteren Zustand (302); und
c) Verbinden des Siebs (100) mit einem Thermostatventilkörper (501).

10. Eine Verwendung des Siebs (100) nach einem der Ansprüche 1 bis 5 in einem Thermostatventil (500) oder in einer Thermostatarmatur (600) oder in beiden.

## Claims

1. A screen (100), wherein the screen (100)
a) is annular in shape,
b) designed to filter water in a sanitary thermostatic valve(500),
c) can be transferred from a first state (301) to a further state (302),
d) has a first circumference in the first state (301), and
e) has a further circumference in the further state (302), wherein the further circumference is greater than the first circumference, wherein the screen (100) includes a screen shell surface (105) over a plurality of screen openings (104), **characterized in that** a spring area of the screen shell surface (105) is designed as a spring element (303), wherein the spring element (303) is designed as a radial outward bulge of the screen shell surface (105).

2. The screen (100) according to claim 1, wherein the screen (100), in an axial direction (101),
a) has a first length in the first state (301), and
b) has a further length in the further state (302), wherein the first length and the further length differ by less than 5% of the first length.

3. The screen (100) according to claim 1 or 2, wherein the screen (100) is formed in one piece.

4. The screen (100) according to any one of the preceding claims, wherein the further circumference is at least 1% greater than the first circumference, relative to the first circumference.

5. The screen (100) according to any one of the preceding claims, wherein the screen (100) includes a screen shell surface (105), wherein the screen shell surface (105) is formed to include a plurality of spring elements (303).

6. A thermostatic valve (500), including the screen (100) according to any one of claims 1 to 5.

7. The thermostatic valve (500) according to claim 6, wherein the thermostatic valve (500) includes a thermostatic valve body (501), wherein the screen (100) is non-positively connected to the thermostatic valve body (501).

8. A thermostatic fitting (600), including the thermostatic valve (500) according to claim 6 or 7.

9. A method (700), including as method steps
a) providing the screen (100) according to any one of claims 1 to 5, wherein the screen (100) is in the first state (301);
b) transferring the screen (100) from the first state (301) to the further state (302); and
c) connecting the screen (100) to a thermostatic valve body (501).

10. A use of the screen (100) according to any one of claims 1 to 5 in a thermostatic valve (500) or in a thermostatic fitting (600) or in both.

## Revendications

1. Un tamis (100), le tamis (100)
a) étant conçu sous forme annulaire,
b) étant conçu pour filtrer de l'eau dans une vanne thermostatique (500) sanitaire,
c) pouvant être transféré d'un premier état (301) dans un autre état (302),
d) ayant dans le premier état (301) une première périphérie et
e) ayant dans l'autre état (302) une autre périphérie,
l'autre périphérie étant supérieure à la première périphérie, le tamis (100) comprenant une surface enveloppante de tamisage (105) sur une pluralité d'orifices de tamisage (104), **caractérisé en ce qu'**une zone élastique de la surface enveloppante de tamisage (105) est conçue sous la forme d'un élément élastique (303), l'élément élastique (303) étant conçu sous la forme d'une protubérance radiale de la surface enveloppante de tamisage (105) vers l'extérieur.

2. Le tamis (100) selon la revendication 1, le tamis (100) ayant dans une direction axiale (101)
a) dans le premier état (301) une première longueur, et
b) dans l'autre état (302) une autre longueur,
la première longueur et l'autre longueur se différenciant de moins de 5 % de la première longueur.

3. Le tamis (100) selon la revendication 1 ou 2, le tamis (100) étant conçu en monobloc.

4. Le tamis (100) selon l'une quelconque des revendications précédentes, l'autre périphérie étant supérieure d'au moins 1 % à la première périphérie, en rapport à la première périphérie.

5. Le tamis (100) selon l'une quelconque des revendications précédentes, le tamis (100) comprenant une surface enveloppante de tamisage (105), la surface enveloppante de tamisage (105) étant conçue de sorte à comprendre une pluralité d'éléments élastiques (303).

6. Une vanne thermostatique (500), comprenant le tamis (100) selon l'une quelconque des revendications 1 à 5.

7. La vanne thermostatique (500) selon la revendication 6, la vanne thermostatique (500) comprenant un corps (501) de vanne thermostatique, le tamis (100) étant assemblé par complémentarité de forme avec le corps (501) de vanne thermostatique.

8. Une robinetterie thermostatique (600), comprenant la vanne thermostatique (500) selon la revendication 6 ou 7.

9. Un procédé (700), comprenant les étapes de procédé consistant à
a) mettre à disposition le tamis (100) selon l'une quelconque des revendications 1 à 5, le tamis (100) se trouvant dans le premier état (301) ;
b) transférer le tamis (100) du premier état (301) dans l'autre état (302) ; et
c) assembler le tamis (100) avec un corps (501) de vanne thermostatique.

10. Une utilisation du tamis (100) selon l'une quelconque des revendications 1 à 5 dans une vanne thermostatique (500) ou dans une robinetterie thermostatique (600) ou dans les deux.
